# EUROPÄISCHE PATENTSCHRIFT

(11) **EP 1 315 768 B1**
(45) Veröffentlichungstag und Bekanntmachung des Hinweises auf die Patenterteilung: **12.10.2016**
(21) Anmeldenummer: 01976084.2
(22) Anmeldetag: 16.08.2001
(51) Int. Cl.: C08G 18/48, C08G 18/66, B32B 15/08, B63B 3/00, E01D 1/00

(54) **VERBUNDELEMENTE ENTHALTEND POLYISOCYANAT-POLYADDITIONSPRODUKTE**
COMPOSITE ELEMENTS CONTAINING POLYISOCYANATE POLYADDITION PRODUCTS
ÉLÉMENT COMPOSITE CONTENANT DES PRODUITS DE POLYADDITION DE POLYISOCYANATE

(30) Priorität: 21.08.2000 DE 10041162
(43) Veröffentlichungstag der Anmeldung: 04.06.2003
(73) Patentinhaber: BASF SE, 67056 Ludwigshafen am Rhein (DE)
(72) Erfinder: FORSTER, Heinz, 82515 Wolfratshausen (DE); HEFNER, Matthias, 85253 Erdweg (DE); KNOBLAUCH, Georg, 81247 München (DE); MERTES, Jürgen, 67122 Altrip (DE); REINERTH, Peter, 82275 Emmering (DE); SANDBANK, Thomas, 80798 München (DE); STADLER, Edmund, 96142 Hollfeld (DE)
(74) Vertreter: BASF IP Association
(86) Internationale Anmeldenummer: PCT/EP2001/009436
(87) Internationale Veröffentlichungsnummer: WO 2002/016460

(56) Entgegenhaltungen:
- WO-A-99/64233
- DE-A- 2 845 631
- DE-A- 19 914 420
- US-A- 4 256 799
- US-A- 5 778 813

## Beschreibung

Verbundelemente enthaltend Polyisocyanat-Polyadditionsprodukte Beschreibung

Die Erfindung betrifft Verbundelemente, die folgende Schichtstruktur aufweisen:
(i) 2 bis 20 mm, bevorzugt 5 bis 20 mm, besonders bevorzugt 5 bis 10 mm Metall,
(ii) 10 bis 100 mm Polyisocyanat-Polyadditionsprodukte, üblicherweise Polyurethane, die gegebenenfalls Harnstoff- und/oder Isocyanuratstrukturen aufweisen können, mit einer Dichte von 350 bis 1050 kg/m³, bevorzugt 500 bis 1050 kg/m³, besonders bevorzugt 800 bis 950 kg/m³, erhältlich durch Umsetzung von (a) Isocyanaten mit (b) gegenüber Isocyanaten reaktiven Verbindungen in Gegenwart von (f) Treibmitteln, die Wasser und/oder Carbamat sind
(iii) 2 bis 20 mm, bevorzugt 5 bis 20 mm, besonders bevorzugt 5 bis 10 mm Metall.

Des weiteren bezieht sich die Erfindung auf Verfahren zur Herstellung dieser Verbundelemente und deren Verwendung.

Für Konstruktion von Schiffen, beispielsweise Schiffsrümpfen und Laderaumabdeckungen, Brücken, Dächern oder Hochhäusern müssen Konstruktionsteile verwendet werden, die erheblichen Belastungen durch äußere Kräfte standhalten können. Derartige Konstruktionsteile bestehen aufgrund dieser Anforderungen üblicherweise aus Metallplatten oder Metallträgern, die durch eine entsprechende Geometrie oder geeignete Verstrebungen verstärkt sind. So bestehen Schiffsrümpfe von Tankschiffen aufgrund von erhöhten Sicherheitsnormen üblicherweise aus einem inneren und einem äußeren Rumpf, wobei jeder Rumpf aus 15 mm dicken Stahlplatten, die durch ca. 2 m lange Stahlverstrebungen miteinander verbunden sind, aufgebaut ist. Da diese Stahlplatten erheblichen Kräften ausgesetzt sind, werden sowohl die äußere, als auch die innere Stahlhülle durch aufgeschweißte Verstärkungselemente versteift. Nachteilig an diesen klassischen Konstruktionsteilen wirken sich sowohl die erheblichen Mengen an Stahl aus, die benötigt werden, als auch die zeit- und arbeitsintensive Herstellung. Zudem weisen derartige Konstruktionsteile ein erhebliches Gewicht auf, wodurch sich eine geringere Tonnage der Schiffe und ein erhöhter Treibstoffbedarf ergibt. Zusätzlich sind solche klassischen Konstruktionselemente auf der Basis von Stahl sehr pflegeintensiv, da sowohl die äußeren Oberfläche, als auch die Oberflächen der Stahlteile zwischen der äußeren und inneren Hülle regelmäßig gegen Korrosion geschützt werden müssen.

Als Ersatz für die Stahlkonstruktionen sind SPS-Elemente (Sandwich-plate-system) bekannt, die einen Verbund aus Metall und Kunststoff beinhalten. Durch die Haftung des Kunststoffs an den zwei Metallschichten entstehen Verbundelemente mit außerordentlichen Vorteilen gegenüber bekannten Stahl Konstruktionen. Derartige SPS-Elemente sind bekannt aus den Schriften DE-A 198 25 083, DE-A 198 25 085, DE-A 198 25 084, DE-A 198 25 087 und DE-A 198 35 727 Verbesserungspotential bezüglich der Herstellung dieser Verbundelemente besteht insbesondere darin, die Reaktionswärme bei der Herstellung des Kunststoffes zwischen den Metallschichten und insbesondere die damit verbundene Ausdehnung des Systems sowie den anschließenden Schrumpf bei und nach der Abkühlung zu kontrollieren. Dabei sollte weder die Haftung des Kunststoffes an den Metallschichten noch die Materialeigenschaften merklich verschlechtert werden.

Der vorliegenden Erfindung lag daher die Idee zugrunde neue Verbundelemente zu entwickeln, die sowohl während der Herstellung des Kunststoffes als auch insbesondere nach der Abkühlung und dem damit verbundenen Schrumpf von (ii) eine hervorragende Haftung von (ii) zu (i) und (iii) aufweisen. Dabei sollten die hergestellten Verbundelemente großen Belastungen durch äußere Kräfte standhalten und beispielsweise im Schiff-, Brücken- oder Hochhausbau Verwendung finden können. Die zu entwickelnden Konstruktionsteile, auch Verbundelemente genannt, sollen als Ersatz für bekannte Stahlkonstruktionen dienen und insbesondere Vorteile hinsichtlich Gewicht, Herstellungsprozeß und Wartungsintensität aufweisen.

Diese Aufgabe wurde erfindungsgemäß durch die eingangs beschriebenen Verbundelemente gelöst.

Bevorzugt sind Verbundelemente, die folgende Schichtstruktur aufweisen:
(i) 2 bis 20 mm Metall,
(ii) 10 bis 100 mm Polyisocyanat-Polyadditionsprodukte mit einer Dichte von 350 bis 1050 kg/m³, bevorzugt 500 bis 1050 kg/m³, besonders bevorzugt 800 bis 950 kg/m³, erhältlich durch Umsetzung von (a) Isocyanaten mit (b) gegenüber Isocyanaten reaktiven Verbindungen in Gegenwart von (f) Treibmitteln die Wasser und/oder Carbamat sind, 1 bis 50 Volumen-%, bezogen auf das Volumen der Polyisocyanat-Polyadditionsprodukte, mindestens eines Gases (c) sowie gegebenenfalls (d) Katalysatoren und/oder (e) Hilfs- und/oder Zusatzstoffen,
(iii) 2 bis 20 mm Metall.

Besonders bevorzugt sind Verbundelemente, die dadurch gekennzeichnet sind, daß (ii) ein Elastizitätsmodul von >275 MPa im Temperaturbereich von -45 bis +50°C, eine Adhäsion zu (i) und (iii) von >4 MPa, eine Dehnung von >30 % im Temperaturbereich von -45 bis +50°C, eine Zugfestigkeit von > 20 MPa und eine Druckfestigkeit von >20 MPa aufweist.

Erfindungswesentlich ist die Tatsache, daß die Polyisocyanat-Polyadditionsprodukte (ii) in Gegenwart von Treibmitteln (f) die Wasser und/oder Carbamat sind, hergestellt werden und die erfindungsgemäße Dichte aufweisen.

Als chemische Treibmittel (f) werden Wasser und/oder Carbamat(e) eingesetzt.

Bevorzugt werden die Treibmittel (f) in einer Menge eingesetzt, die ausreicht, um die erfindungsgemäße Dichte von (ii) zu erhalten. Dies kann mit einfachen Routineexperimenten, die dem Fachmann allgemein geläufig sind, ermittelt werden. Besonders bevorzugt werden die Treibmittel (f) in einer Menge von 0,05 bis 10 Gew.-%, insbesondere von 0,1 bis 5 Gew.-%, jeweils bezogen auf das Gesamtgewicht der Polyisocyanat-Polyadditionsprodukte, eingesetzt.

Die erfindungsgemäßen Verbundelemente weisen neben hervorragenden mechanischen Eigenschaften insbesondere den Vorteil auf, daß auch Verbundelemente mit sehr großen Abmessungen zugänglich sind. Derartige Verbundelemente, die erhältlich sind durch Herstellung eines Kunststoffes (ii) zwischen zwei Metallplatten (i) und (iii), waren bislang aufgrund des Schrumpfes des Kunststoffes (ii) während und nach seiner Umsetzung nur eingeschränkt zugänglich. Aufgrund des Schrumpfes des Kunststoffes (ii), beispielsweise der Polyisocyanat-Polyadditionsprodukte, erfolgt eine teilweise Ablösung des Kunststoffes (ii) von den Metallplatten (i) und/oder (iii). Gerade eine möglichst vollständige und sehr gute Haftung des Kunststoffes (ii) an den Metallplatten (i) und/oder (iii) ist aber für die mechanischen Eigenschaften eines solchen Verbundelementes von besonderer Bedeutung.

Als Komponente (c) zur Herstellung von (ii) können allgemein bekannte Verbindungen eingesetzt werden, die einen Siedepunkt bei einem Druck von 1 bar von kleiner (d.h. bei niedrigeren Temperaturen als) -50°C aufweisen, beispielsweise Luft, Kohlendioxid, Stickstoff, Helium und/oder Neon. Bevorzugt wird Luft eingesetzt. Die Komponente (c) ist bevorzugt gegenüber der Komponente (a), besonders bevorzugt gegenüber den Komponenten (a) und (b) inert, d.h. eine Reaktivität des Gases gegenüber (a) und (b) ist kaum, bevorzugt nicht nachzuweisen. Der Einsatz des Gases (c) unterscheidet sich grundlegend von dem Einsatz üblicher Treibmittel zur Herstellung von geschäumten Polyurethanen. Während übliche Treibmittel (f) flüssig eingesetzt werden oder im Falle der gasförmigen physikalischen Treibmittel in der Polyol-Komponente bis zu einem geringen Prozentsatz löslich sind) und während der Umsetzung entweder aufgrund der Wärmeentwicklung verdampfen oder aber im Falle des Wassers aufgrund der Reaktion mit den Isocyanatgruppen gasförmiges Kohlendioxid entwickeln, wird in der vorliegenden Erfindung die Komponente (c) bevorzugt bereits gasförmig als Aerosol beispielsweise in der Polyolkomponente eingesetzt.

Bevorzugt werden zur Herstellung von (ii) als (e) übliche Schaumstabilisatoren eingesetzt, die kommerziell erhältlich und dem Fachmann allgemein bekannt sind, beispielsweise allgemein bekannte Polysiloxan-Polyoxyalkylen-Blockcopolymere, z.B. Tegostab 2219 der Firma Goldschmidt. Der Anteil an diesen Schaumstabilisatoren bei der Herstellung von (ii) beträgt bevorzugt 0,001 bis 10 Gew.-%, besonders bevorzugt 0,01 bis 10 Gew.-%, insbesondere 0,01 bis 2 Gew.-%, bezogen auf das Gewicht der zur Herstellung von (ii) eingesetzten Komponenten (b), (e) und gegebenenfalls (d). Der Einsatz dieser Schaumstabilisatoren bewirkt, das die Komponente (c) in der Reaktionsmischung zur Herstellung von (ii) stabilisiert wird.

Die Herstellung der erfindungsgemäßen Verbundelemente kann man derart durchführen, daß man zwischen (i) und (iii) Polyisocyanat-Polyadditionsprodukte (ii), üblicherweise Polyurethane, die gegebenenfalls Harnstoff- und/oder Isocyanuratstrukturen aufweisen können, durch Umsetzung von (a) Isocyanaten mit (b) gegenüber Isocyanaten reaktiven Verbindungen in Gegenwart Treibmitteln (f) und bevorzugt 1 bis 50 Volumen-%, bezogen auf das Volumen der Polyisocyanat-Polyadditionsprodukte, mindestens eines Gases (c) sowie besonders bevorzugt (d) Katalysatoren und/oder (e) Hilfs- und/oder Zusatzstoffen herstellt, die an (i) und (iii) haften.

Bevorzugt wird die Umsetzung in einer geschlossenen Form durchgeführt, d.h. (i) und (iii) befinden sich bei der Befüllung mit den Ausgangskomponenten zur Herstellung von (ii) in einer Form, die nach der vollständigen Eintragung der Ausgangskomponenten verschlossen wird. Nach der Umsetzung der Ausgangskomponenten zur Herstellung von (ii) kann das Verbundelement entformt werden.

Bevorzugt kann man die Oberflächen von (i) und/oder (iii), an die (ii) nach der Herstellung der Verbundelemente haftet, mit Sand oder Stahlkugeln bestrahlen. Dieses Sandstrahlen kann nach üblichen Verfahren erfolgen. Beispielsweise kann man die Oberflächen unter hohem Druck mit üblichem Sand bestrahlen und damit beispielsweise reinigen und Aufrauhen. Geeignete Apparaturen für eine solche Behandlung sind kommerziell erhältlich.

Durch diese Behandlung der Oberflächen von (i) und (iii), die nach der Umsetzung von (a) mit (b) in Kontakt mit (ii) stehen, führt zu einer deutlich verbesserten Haftung von (ii) an (i) und (iii). Das Sandstrahlen wird bevorzugt direkt vor der Einbringung der Komponenten zur Herstellung von (ii) in den Raum zwischen (i) und (iii) durchgeführt. Die Oberflächen von (i) und (iii), an die (ii) haften soll, sind bevorzugt frei von anorganischen und/oder organischen Stoffen, die eine Haftung vermindern, beispielsweise Ölen und Fetten oder allgemein als Formtrennmitteln bekannten Stoffen.

Nach der bevorzugten Behandlung der Oberflächen von (i) und (iii) werden diese Schichten bevorzugt in geeigneter Anordnung, beispielsweise parallel zueinander, fixiert. Der Abstand wird üblicherweise so gewählt, daß der Raum zwischen (i) und (iii) eine Dicke von 10 bis 100 mm aufweist. Die Fixierung von (i) und (iii) kann beispielsweise durch Abstandshalter erfolgen. Die Ränder des Zwischenraumes können bevorzugt derart abgedichtet werden, daß der Raum zwischen (i) und (iii) zwar mit (a), (b) und (f) sowie gegebenenfalls den weiteren Ausgangsstoffen gefüllt werden kann, ein Herausfließen dieser Komponenten aber verhindert wird. Das Abdichten kann mit üblichen Kunststoff- oder Metallfolien und/oder Metallplatten, die auch als Abstandshalter dienen können, erfolgen.

Die Schichten (i) und (iii) können bevorzugt als übliche Metallplatten, beispielsweise Stahlplatten, mit den erfindungsgemäßen Dicken eingesetzt werden.

Die Befüllung des Raumes zwischen (i) und (iii) kann sowohl in vertikaler Ausrichtung von (i) und (iii), als auch in horizontaler Ausrichtung von (i) und (iii) erfolgen.

Das Befüllen des Raumes zwischen (i) und (iii) mit (a), (b) und (f) sowie gegebenenfalls den weiteren Ausgangsstoffen kann mit üblichen Fördereinrichtungen, bevorzugt kontinuierlich, durchgeführt werden, beispielsweise Hoch- und Niederdruckmaschinen, vorzugsweise Hochdruckmaschinen.

Die Förderleistung kann in Abhängigkeit des zu befüllenden Volumens variiert werden. Um eine homogene Durchhärtung von (ii) zu gewährleisten, wird die Förderleistung und Fördereinrichtung derart gewählt, daß der zu befüllende Raum innerhalb von 0,5 bis 20 min mit den Komponenten zur Herstellung von (ii) gefüllt werden kann.

Als Schichten (i) und (iii), üblicherweise Platten, können übliche Metalle verwendet werden, beispielsweise Eisen, üblicher Stahl, alle Arten von veredeltem Stahl, Aluminium und/oder Kupfer.

Sowohl (i) als auch (ii) können beschichtet, beispielsweise grundiert, lackiert und/oder mit üblichen Kunststoffen beschichtet bei der Herstellung der erfindungsgemäßen Verbundelemente eingesetzt werden. Bevorzugt werden (i) und (iii) unbeschichtet und besonders bevorzugt beispielsweise durch übliches Sandstrahlen gereinigt eingesetzt.

Die Herstellung der Polyisocyanat-Polyadditionsprodukten (ii), üblicherweise Polyurethan- und gegebenenfalls Polyisocyanuratprodukten, insbesondere Polyurethanelastomeren, durch Umsetzung von (a) Isocyanaten mit (b) gegenüber Isocyanaten reaktiven Verbindungen in Gegenwart von (f) sowie gegebenenfalls (d) Katalysatoren und/oder (e) Hilfsmitteln und/oder Zusatzstoffen und/oder (c) ist vielfach beschrieben worden.

Die Ausgangsstoffe (a), (b), (d) und (e) in dem erfindungsgemäßen Verfahren werden im Folgenden beispielhaft beschrieben:
Als Isocyanate (a) kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder isocyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat (TDI), 4,4'-, 2,4'-und/oder 2,2'-Diphenylmethandiisocyanat (MDI), Polyphenylpolymethylen-polyisocyanate und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Bevorzugt werden 2,4'-, 2,2'- und/oder 4,4'-MDI und/oder Polyphenylpolymethylenpolyisocyanate eingesetzt, besonders bevorzugt Mischungen enthaltend Polyphenylpolymethylen-polyisocyanate und mindestens eines der MDI-Isomere.

Als (b) gegenüber Isocyanaten reaktive Verbindungen können beispielsweise Verbindungen eingesetzt werden, die als gegenüber Isocyanaten reaktive Gruppen Hydroxyl-, Thiol- und/oder primäre und/oder sekundäre Aminogruppen aufweisen und üblicherweise ein Molekulargewicht von 60 bis 10000 g/mol aufweisen, z.B. Polyole ausgewählt aus der Gruppe der Polyetherpolyalkohole, Polyester-polyalkohole, Polythioether-polyole, hydroxylgruppenhaltigen Polyacetale und hydroxylgruppenhaltigen aliphatischen Polycarbonate oder Mischungen aus mindestens zwei der genannten Polyole. Diese Verbindungen weisen üblicherweise eine Funktionalität gegenüber Isocyanaten von 2 bis 6 und ein Molekulargewicht von 400 bis 8000 auf und sind dem Fachmann allgemein bekannt.

Beispielsweise kommen als Polyetherpolyalkohole, die nach bekannter Technologie durch Anlagerung von Alkylenoxiden, beispielsweise Tetrahydrofuran, 1,3-Propylenoxid, 1,2- bzw. 2,3-Butylenoxid, Styroloxid und vorzugsweise Ethylenoxid und/oder 1,2-Propylenoxid an übliche Startersubstanzen erhältlich sind. Als Startersubstanzen können beispielsweise bekannte aliphatische, araliphatische, cycloaliphatische und/oder aromatische Verbindungen eingesetzt werden, die mindestens eine, bevorzugt 2 bis 4 Hydroxylgruppen und/oder mindestens eine, bevorzugt 2 bis 4 Aminogruppen enthalten. Beispielsweise können als Startersubstanzen Ethandiol, Diethylenglykol, 1,2- bzw. 1,3-Propandiol, 1,4-Butandiol, 1,5-Pentandiol, 1,6-Hexandiol, 1,7-Heptandiol, Glycerin, Trimethylolpropan, Neopentylglykol, Zucker, beispielsweise Saccharose, Pentaerythrit, Sorbitol, Ethylendiamin, Propandiamin, Neopentandiamin, Hexamethylendiamin, Isophorondiamin, 4,4'-Diaminodicyclohexylmethan, 2-(Ethylamino)ethylamin, 3-(Methylamino)propylamin, Diethylentriamin, Dipropylentriamin und/oder N,N'-Bis(3-aminopropyl)-ethylendiamin eingesetzt werden.

Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Die erfindungsgemäßen Verbundelemente werden bevorzugt unter Verwendung von Polyetherpolyalkoholen als Komponente (b) zur Umsetzung mit den Isocyanaten hergestellt, zweckmäßigerweise solche mit einer mittleren Funktionalität gegenüber Isocyanaten von 1,5 bis 8, bevorzugt 2 bis 6, und einem Molekulargewicht von 400 bis 8000.

Die Verwendung von Polyetherpolyalkoholen bietet erhebliche Vorteile durch eine verbesserte Stabilität der Polyisocyanat-Polyadditionsprodukte gegen eine hydrolytische Spaltung und aufgrund der geringeren Viskosität, jeweils im Vergleich mit Polyesterpolyalkoholen. Die verbesserte Stabilität gegen Hydrolyse ist insbesondere bei einem Einsatz im Schiffbau vorteilhaft. Die geringere Viskosität der Polyetherpolyalkohole und der Reaktionsmischung zur Herstellung von (ii) enthaltend die Polyetherpolyalkohole ermöglicht eine schnellere und einfachere Befüllung des Raumes zwischen (i) und (iii) mit der Reaktionsmischung zur Herstellung der Verbundelemente. Aufgrund der erheblichen Abmessungen insbesondere von Konstruktionsteilen im Schiffbau sind niedrigviskose Flüssigkeiten von erheblichem Vorteil.

Als gegenüber Isocyanaten reaktive Verbindungen sind des weiteren Substanzen geeignet, die ein Kohlenwasserstoffgerüst mit 10 bis 40 Kohlenstoffatomen und 2 bis 4 gegenüber Isocyanaten reaktive Gruppen aufweisen. Unter dem Ausdruck Kohlenwasserstoffgerüst ist eine ununterbrochene Abfolge von Kohlenstoffatomen zu verstehen, die nicht wie beispielsweise im Falle von Ethern mit Sauerstoffatomen unterbrochen ist. Als solche Substanzen, im Folgenden auch als (b3) bezeichnet, können beispielsweise Rizinusöl und deren Derivate eingesetzt werden.

Als gegenüber Isocyanaten reaktive Verbindungen können des weiteren zusätzlich zu den genannten Verbindungen mit einem üblichen Molekulargewicht von 400 bis 8000 gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan, niedermolekulare hydroxylgruppenhaltige Polyalkylenoxide auf Basis Ethylen- und/oder 1,2-Propylenoxid und den vorgenannten Diolen und/oder Triolen als Startermoleküle und/oder Diamine wie z.B. Diethyltoluendiamin und/oder 3,5-Dimethylthio-2,4-toluenediamin.

Sofern zur Herstellung der Polyisocyaynat-Polyadditionsprodukten Kettenverlängerungsmittel, Vernetzungsmittel oder Mischungen davon Anwendung finden, kommen diese zweckmäßigerweise in einer Menge von 0 bis 30 Gew.-%, vorzugsweise von 1 bis 30 Gew.-%, bezogen auf das Gewicht der insgesamt eingesetzten gegenüber Isocyanaten reaktiven Verbindungen (b), zum Einsatz.

Außerdem können als (b) aliphatische, araliphatische, cycloaliphatische und/oder aromatische Carbonsäuren zur Optimierung des Härtungsverlaufes bei der Herstellung von (ii) eingesetzt werden. Beispiele für solche Carbonsäuren sind Ameisensäure, Essigsäure, Bernsteinsäure, Oxalsäure, Malonsäure, Glutarsäure, Adipinsäure, Zitronensäure, Benzoesäure, Salicylsäure, Phenylessigsäure, Phthalsäure, Toluolsulfonsäure, Derivate der genannten Säuren, Isomere der genannten Säuren und beliebigen Mischungen der genannten Säuren. Der Gewichtsanteil dieser Säuren kann 0 bis 5 Gew.-%, bevorzugt 0,2 bis 2 Gew.-%, bezogen auf das Gesamtgewicht von (b), betragen.

Bevorzugt setzt man als (b) eine Mischung ein, die enthält:
(b1) 40 bis 99 Gew.-% Polyetherpolyalkohol mit einer mittleren Funktionalität von 1,5 bis 2,99 und einem mittleren Molekulargewicht von 400 bis 8000 und
(b2) 1 bis 60 Gew.-% Polyetherpolyalkohol mit einer mittleren Funktionalität von 3 bis 5 und einem mittleren Molekulargewicht von 150 bis 8000, wobei die Gewichtsangaben jeweils auf das Gesamtgewicht der Mischung bezogen sind.

Besonders bevorzugt setzt man als (b) eine Mischung ein, die enthält:
(b1) 40 bis 98, bevorzugt 50 bis 80 Gew.-% Polyetherpolyalkohol mit einer mittleren Funktionalität von 1,9 bis 3,2, bevorzugt 2,5 bis 3 und einem mittleren Molekulargewicht von 2500 bis 8000,
(b2) 1 bis 30, bevorzugt 10 bis 25 Gew.-% Polyetherpolyalkohol mit einer mittleren Funktionalität von 1,9 bis 3,2, bevorzugt 2,5 bis 3 und einem mittleren Molekulargewicht von 150 bis 399 und
(b3) 1 bis 30, bevorzugt 10 bis 25 Gew.-% mindestens eines aliphatischen, cycloaliphatischen und/oder araliphatischen Diols mit 2 bis 14, vorzugsweise 4 bis 10 Kohlenstoffatomen, wobei die Gewichtsangaben jeweils auf das Gesamtgewicht der Mischung bezogen sind.

Bevorzugt beträgt das Gewichtsverhältnis von Polyetherpolyalkoholen zu Polyesterpolyalkoholen in der Komponente (b) >100, besonders bevorzugt >1000, insbesondere bevorzugt werden zur Herstellung von (ii) keine Polyesterpolyalkohole als (b) eingesetzt.

Mit dem Einsatz von Amin-gestarteten Polyetherpolyalkoholen kann zudem das Durchhärteverhalten von der Reaktionsmischung zur Herstellung von (ii) verbessert werden.

Als Katalysatoren (d) können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N,N',N"-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Es hat sich als sehr vorteilhaft erwiesen, die Herstellung von (ii) in Gegenwart von (d) durchzuführen, um die Reaktion zu beschleunigen.

Der Reaktionsmischung zur Herstellung der Polyisocyanat-Polyadditionsprodukte (ii) können gegebenenfalls (e) Hilfsmittel und/oder Zusatzstoffe einverleibt werden. Genannt seien beispielsweise Füllstoffe, oberflächenaktive Substanzen, Farbstoffe, Pigmente, Flammschutzmittel, Hydrolyseschutzmittel, fungistatische, bakteriostatisch wirkende Substanzen und Schaumstabilisatoren.

Als oberflächenaktive Substanzen kommen z.B. Verbindungen in Betracht, welche zur Unterstützung der Homogenisierung der Ausgangsstoffe dienen und gegebenenfalls auch geeignet sind, die Struktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen (b), angewandt.

Geeignete Flammschutzmittel sind beispielsweise Trikresylphosphat,Tris-(2-chlorethyl)phosphat, Tris-(2-chlorpropyl)-phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und Glasfasern geringer Länge. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden.

Bevorzugt setzt man bei der Herstellung von (ii) 10 bis 70 Gew.-% Füllstoffe, bezogen auf das Gewicht von (ii), als (e) Hilfsund/oder Zusatzstoffe ein. Als Füllstoffe verwendet man bevorzugt Talkum, Kaolin, Calziumcarbonat, Schwerspat, Glasfasern und/oder Mikroglaskugeln. Die Größe der Partikel der Füllstoffe ist bevorzugt so zu wählen, daß das Eintragen der Komponenten zur Herstellung von (ii) in den Raum zwischen (i) und (iii) nicht behindert wird. Besonders bevorzugt weisen die Füllstoffe Partikelgrößen von < 0,5 mm auf.

Die Füllstoffe werden bevorzugt in Mischung mit der Polyolkomponente bei der Umsetzung zur Herstellung der Polyisocyanat-Polyadditionsprodukte eingesetzt.

Die Füllstoffe können dazu dienen, den im Vergleich beispielsweise zum Stahl größeren thermischen Ausdehnungskoeffizient der Polyisocyanat-Polyadditionsprodukte zu verringern und damit dem des Stahls anzupassen. Dies für einen nachhaltig festen Verbund zwischen den Schichten (i), (ii) und (iii) besonders vorteilhaft, da damit geringere Spannungen zwischen den Schichten bei thermischer Belastung auftreten.

Das Gewicht von (ii) entspricht per Definition dem Gewicht der zur Herstellung von (ii) eingesetzten Komponenten (a), (b) und (c) sowie gegebenenfalls (d) und/oder (e).

Zur Herstellung der erfindungsgemäßen Polyisocyanat-Polyadditionsprodukte werden die Isocyanate und die gegenüber Isocyanaten reaktiven Verbindungen in solchen Mengen zur Umsetzung gebracht, daß das Äquivalenzverhältnis von NCO-Gruppen der Isocyanate (a) zur Summe der reaktiven Wasserstoffatome der gegenüber Isocyanaten reaktiven Verbindungen (b) und gegebenenfalls (f) 0,85 bis 1,25 : 1, vorzugsweise 0,95 bis 1,15 : 1 und insbesondere 1 bis 1,05 : 1, beträgt. Falls (ii) zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyisocyanat-Polyadditionsprodukte werden üblicherweise nach dem one shot-Verfahren oder nach dem Prepolymerverfahren, beispielsweise mit Hilfe der Hochdruck- oder Niederdruck-Technik hergestellt.

Als besonders vorteilhaft hat es sich erwiesen, nach dem Zweikomponentenverfahren zu arbeiten und die gegenüber Isocyanaten reaktiven Verbindungen (b), die Treibmittel (f) und gegebenenfalls die Katalysatoren (d) und/oder Hilfs- und/oder Zusatzstoffe (e) in der Komponente (A) zu vereinigen und bevorzugt innig miteinander zu vermischen und als Komponente (B) die Isocyanate (a) zu verwenden.

Die Komponente (c) kann der Reaktionsmischung enthaltend (a), (b), (f) und gegebenenfalls (d) und/oder (e) zugeführt werden, und/oder den einzelnen, bereits beschriebenen Komponenten (a), (b), (A) und/oder (B). Die Komponente, die mit (c) gemischt wird, liegt üblicherweise flüssig vor. Bevorzugt wird die Komponenten in die Komponente (b) gemischt.

Das Mischen der entsprechenden Komponente mit (c) kann nach allgemein bekannten Verfahren erfolgen. Beispielsweise kann (c) durch allgemein bekannte Beladungseinrichtungen, beispielsweise Luftbeladungseinrichtungen, bevorzugt unter Druck, beispielsweise aus einem Druckbehälter oder durch einen Kompressor komprimiert, z.B. durch eine Düse der entsprechenden Komponente zugeführt werden. Bevorzugt erfolgt eine weitgehende Durchmischung der entsprechende Komponenten mit (c), so daß Gasblasen von (c) in der üblicherweise flüssigen Komponente bevorzugt eine Größe von 0,0001 bis 10, besonders bevorzugt 0,0001 bis 1 mm aufweisen.

Der Gehalt an (c) in der Reaktionsmischung zur Herstellung von (ii) kann in der Rücklaufleitung der Hochdruckmaschine mit allgemein bekannten Meßgeräten über die Dichte der Reaktionsmischung bestimmt werden. Die Gehalt an (c) in der Reaktionsmischung kann über eine Kontrolleinheit bevorzugt automatisch auf der Grundlage dieser Dichte reguliert werden. Die Komponentendichte kann während der üblichen Zirkulation des Materials in der Maschine auch bei sehr niedriger Zirkulationsgeschwindigkeit online bestimmt und reguliert werden.

Das Sandwichelement kann beispielsweise hergestellt werden, indem man den zwischen (i) und (iii) mit den Ausgangskomponenten zur Herstellung von (ii) zu befüllenden Raum mit Ausnahme von einer Zuleitung und Ableitung für die Ausgangskomponenten abdichtet, und die Ausgangskomponenten (a), (b), (f) und gegebenenfalls (c), (d) und/oder (e) bevorzugt gemischt über die Zuleitung, bevorzugt mit einer üblichen Hochdruckmaschine, in den Raum zwischen (i) und (iii) füllt.

Die Ausgangskomponenten werden üblicherweise bei einer Temperatur von 0 bis 100°C, vorzugsweise von 20 bis 60°C, gemischt und wie bereits beschrieben in den Raum zwischen (i) und (iii) eingebracht. Die Vermischung kann mechanisch mittels eines Rührers oder einer Rührschnecke, bevorzugt aber durch das bei Hochdruckmaschinen übliche Gegenstromprinzip erfolgen, bei dem A- und B-Komponenten-Strahl sich im Mischkopf unter jeweils hohem Druck treffen und vermischen, wobei der Strahl einer jeden Komponente auch geteilt sein kann. Die Reaktionstemperatur, d.h. die Temperatur, bei die Umsetzung erfolgt, beträgt üblicherweise >20°C, bevorzugt 50 bis 150°C.

Die Polyisocyanat-Polyadditionsprodukte (ii) der erfindungsgemäß hergestellten Verbundelemente weisen bevorzugt ein Elastizitätsmodul von >275 MPa im Temperaturbereich von -45 bis +50°C (nach DIN 53457), eine Adhäsion zu (i) und (iii) von >4 MPa (nach DIN 53530), eine Dehnung von >30 % im Temperaturbereich von -45 bis +50°C (nach DIN 53504), eine Zugfestigkeit von >20 MPa (nach DIN 53504) und eine Druckfestigkeit von > 20 MPa (nach DIN 53421) auf.

Die nach dem erfindungsgemäßen Verfahren herstellbaren, erfindungsgemäßen Verbundelemente weisen folgende Vorteile gegenüber bekannten Konstruktionen auf:
- Der Einsatz der Treibmittel (f) bewirkt einen geringeren Schrumpf bei der Abkühlung des Systems nach der Umsetzung im Vergleich zu Polyurethanen höherer Dichte. Damit wird eine bessere Haftung zu (i) und (iii) erreicht, da ein Ablösen bei der Abkühlung vermieden wird.
- Aufgrund des bevorzugten Einsatzes von (c) kann zusätzlich ein Schrumpf von (ii) und damit eine Beeinträchtigung der Haftung von (ii) an (i) und (iii) vermieden werden.

Entsprechend finden die erfindungsgemäß erhältlichen Verbundelemente Verwendung vor allem in Bereichen, in denen Konstruktionselemente benötigt werden, die großen Kräften standhalten, beispielsweise als Konstruktionsteile im Schiffsbau, z.B. in Schiffsrümpfen, beispielsweise Schiffsdoppelrümpfe mit einer äußeren und einer inneren Wand, und Laderaumabdeckungen, oder in Bauwerken, beispielsweise Brücken oder als Konstruktionselemente im Hausbau, insbesondere in Hochhäusern.

Die erfindungsgemäßen Verbundelemente sind nicht mit klassischen Sandwichelementen zu verwechseln, die als Kern einen Polyurethan- und/oder Polyisocyanurathartschaumstoff enthalten und üblicherweise zur thermischen Isolierung eingesetzt werden. Derartige bekannte Sandwichelemente wären aufgrund ihrer vergleichsweise geringeren mechanischen Belastbarkeit nicht für die genannten Anwendungsbereiche geeignet.

## Patentansprüche

1. Verbundelemente, die folgende Schichtstruktur aufweisen:
(i) 2 bis 20 mm Metall,
(ii) 10 bis 100 mm Polyisocyanat-Polyadditionsprodukte mit einer Dichte von 350 bis 1050 kg/m³ erhältlich durch Umsetzung von (a) Isocyanaten mit (b) gegenüber Isocyanaten reaktiven Verbindungen in Gegenwart von (f) Treibmitteln, die Wasser und/ oder Carbamat sind
(iii) 2 bis 20 mm Metall.

2. Verbundelemente, die folgende Schichtstruktur aufweisen:
(i) 2 bis 20 mm Metall,
(ii) 10 bis 100 mm Polyisocyanat-Polyadditionsprodukte mit einer Dichte von 350 bis 1050 kg/m³ erhältlich durch Umsetzung von (a) Isocyanaten mit (b) gegenüber Isocyanaten reaktiven Verbindungen in Gegenwart von (f) Treibmitteln, die Wasser und/ oder Carbamat sind, 1 bis 50 Volumen-%, bezogen auf das Volumen der Polyisocyanat-Polyadditionsprodukte, mindestens eines Gases (c) sowie gegabenenfalls (d) Katalysatoren und/oder (e) Hilfs- und/oder Zusatzstoffen,
(iii) 2 bis 20 mm Metall.

3. Verbundelemente nach Anspruch 2 enthaltend Schaumstabilisatoren als (e).

4. Verbundelemente nach Anspruch 1 oder 2, **dadurch gekennzeichnet, daß** man als (b) mindestens ein Polyetherpolyol einsetzt.

5. Verbundelemente nach Anspruch 2, **dadurch gekennzeichnet, daß** (ii) 10 bis 70 Gew.-% Füllstoffe, bezogen auf das Gewicht von (ii), als (e) Hilfs- und/oder Zusatzstoffe enthält.

6. Verbundelemente nach Anspruch 1 oder 2, **dadurch gekennzeichnet, daß** (ii) ein Elastizitätsmodul von >275 MPa im Temperaturbereich von -45 bis +50°C. eine Adhäsion zu (i) und (iii) von >4 MPa, eine Dehnung von >30 % im Temperaturbereich von -45 bis +50°C. eine Zugfestigkeit von >20 MPa und eine Druckfestigkeit von >20 MPa aufweist.

7. Verfahren zur Herstellung von Verbundelementen nach einem der Ansprüche 1 bis 6, **dadurch gekennzeichnet, daß** man zwischen (i) und (iii) Polyisocyanat-Polyadditionsprodukte (ii) durch Umsetzung von (a) Isocyanaten mit (b) gegenüber Isocyanaten reaktiven Verbindungen in Gegenwart Treibmitteln (f) herstellt, die an (i) und (iii) haften.

8. Verfahren nach Anspruch 7, **dadurch gekennzeichnet, daß** man die Umsetzung in einer geschlossenen Form durchführt.

9. Verbundelemente erhältlich durch ein Verfahren gemäß Anspruch 7 oder 8.

10. Verwendung von Verbundelementen nach einem der Ansprüche 1 bis 5 oder 8 als Konstruktionsteile im Schiffbau, beispielsweise in Schiffsrümpfen und Laderaumabdeckungen, oder in Bauwerken, beispielsweise Brücken.

11. Schiffe oder Brücken enthaltend Verbundelemente nach einem der Ansprüche 1 bis 6 oder 9.

## Claims

1. A composite element having the following layered structure:
(i) from 2 to 20 mm of metal,
(ii) from 10 to 100 mm of polyisocyanate polyaddition products with density from 350 to 1050 kg/m³ obtainable by reaction of (a) isocyanates with (b) isocyanate-reactive compounds in the presence of (f) blowing agents which are water and/or carbamate,
(iii) from 2 to 20 mm of metal.

2. A composite element having the following layered structure:
(i) from 2 to 20 mm of metal,
(ii) from 10 to 100 mm of polyisocyanate polyaddition products with density from 350 to 1050 kg/m³ obtainable by reaction of (a) isocyanates with (b) isocyanate-reactive compounds in the presence of (f) blowing agents which are water and/or carbamate, from 1 to 50 % by volume, based on the volume of the polyisocyanate polyaddition products, of at least one gas (c) and also optionally (d) catalysts and/or (e) auxiliaries and/or additives,
(iii) from 2 to 20 mm of metal.

3. The composite element according to claim 2 comprising foam stabilizers as (e).

4. The composite element according to claim 1 or claim 2, wherein at least one polyether polyol is used as (b).

5. The composite element according to claim 2, wherein (ii) comprises from 10 to 70 % by weight of fillers, based on the weight of (ii), as (e) auxiliaries and/or additives.

6. The composite element according to claim 1 or claim 2, wherein (ii) has a modulus of elasticity > 275 MPa in the temperature range from -45 to +50°C, adhesion toward (i) and (iii) of > 4 MPa, elongation of > 30 % in the temperature range from - 45 to +50°C, tensile strength of > 20 MPa and compressive strength of > 20 MPa.

7. A process for the production of a composite element according to any of claims 1 to 6, which comprises producing, between (i) and (iii), polyisocyanate polyaddition products (ii) by reaction of (a) isocyanates with (b) isocyanate-reactive compounds in the presence of blowing agents (f), where said products adhere to (i) and (ii).

8. The process according to claim 7, wherein the reaction is carried out in a closed mold.

9. A composite element obtainable by a process according to claim 7 or claim 8.

10. The use of a composite element according to any of claims 1 to 5 or claim 8 as a constructional element in shipbuilding, for example in hulls and hold covers, or in construction works, for example bridges.

11. A ship or bridge comprising composite elements according to any of claims 1 to 6 or claim 9.

## Revendications

1. Eléments composites qui présentent la structure à couches suivante :
(i) 2 à 20 mm de métal,
(ii) 10 à 100 mm de produits de polyaddition de polyisocyanate avec une densité de 350 à 1050 kg/m³, pouvant être obtenus par transformation de (a) des isocyanates avec (b) des composés réactifs par rapport aux isocyanates en présence de (f) des propulseurs, qui sont de l'eau et/ou du carbamate,
(iii) 2 à 20 mm de métal.

2. Eléments composites qui présentent la structure à couches suivante :
(i) 2 à 20 mm de métal,
(ii) 10 à 100 mm de produits de polyaddition de polyisocyanate avec une densité de 350 à 1050 kg/m³, pouvant être obtenus par transformation de (a) des isocyanates avec (b) des composés réactifs par rapport aux isocyanates en présence de (f) des propulseurs, qui sont de l'eau et/ou du carbamate, 1 à 50% en volume, par rapport au volume de produits de polyaddition de polyisocyanate, d'au moins un gaz (c) ainsi que le cas échéant de (d) des catalyseurs et/ou (e) des adjuvants et/ou des additifs,
(iii) 2 à 20 mm de métal.

3. Eléments composites selon la revendication 2, contenant des stabilisateurs de mousse comme (e).

4. Eléments composites selon la revendication 1 ou 2, **caractérisés en ce qu'**on utilise, comme (b), au moins un polyétherpolyol.

5. Eléments composites selon la revendication 2, **caractérisés en ce que** (ii) contient 10 à 70% en poids de charges, par rapport au poids de (ii), comme (e) adjuvants et/ou additifs.

6. Eléments composites selon la revendication 1 ou 2, **caractérisés en ce que** (ii) présente un module d'élasticité > 275 MPa dans la plage de température de -45 à +50°C, une adhérence sur (i) et (iii) > 4 MPa, un allongement > 30% dans la plage de température de -45 à +50°C, une résistance à la traction > 20 MPa et une résistance à la compression > 20 MPa.

7. Procédé pour la préparation d'éléments composites selon l'une quelconque des revendications 1 à 6, **caractérisé en ce qu'**on produit entre (i) et (iii) des produits de polyaddition de polyisocyanate (ii) par transformation de (a) des isocyanates avec (b) des composés réactifs par rapport aux isocyanates en présence de propulseurs (f), qui adhèrent à (i) et (iii).

8. Procédé selon la revendication 7, **caractérisé en ce qu'**on réalise la transformation dans un moule fermé.

9. Eléments composites pouvant être obtenus par un procédé selon la revendication 7 ou 8.

10. Utilisation d'éléments composites selon l'une quelconque des revendications 1 à 5 ou 8 comme pièces de construction dans la construction navale, par exemple dans les coques de bateaux et les recouvrements de cales, ou dans des ouvrages de construction, par exemple des ponts.

11. Bateaux ou ponts, contenant des éléments composites selon l'une quelconque des revendications 1 à 6 ou 9.
